# FASCICULE DE BREVET EUROPEEN

(11) **EP 1 035 187 B1**
(45) Date de publication et mention de la délivrance du brevet: **12.05.2004**
(21) Numéro de dépôt: 00420043.2
(22) Date de dépôt: 06.03.2000
(51) Int. Cl.: C09J 7/04

(54) **Toile à peindre destinée à former en revêtement d'une surface intérieure de bâtiment**
Leinwand zum Verkleiden von Innenflächen in Gebäuden
Canvase for covering interior surfaces of buildings

(30) Priorité: 08.03.1999 FR 9902978
(43) Date de publication de la demande: 13.09.2000
(73) Titulaire: Mermet S.A., 38630 Veyrins (FR)
(72) Inventeur: Gevaux, Pascal, 38110 Saint Jean de Soudain (FR)
(74) Mandataire: Maureau, Philippe

(56) Documents cités:
- DE-A- 1 806 005
- DE-A- 2 623 903
- DE-A- 3 317 591
- DE-A- 4 411 562
- GB-A- 1 398 870
- NL-A- 7 208 051

## Description

La présente invention a pour objet une toile à peindre destinée à former un revêtement d'une surface intérieure de bâtiment. La toile dont il s'agit peut être un tissu de verre, mais aussi une toile à base de fils de matière synthétique, ou d'un mélange de fils synthétiques et de fils de verre.

Il est connu de réaliser des revêtements notamment pour murs et plafonds de bâtiment, constitués par des toiles réalisées notamment à base de tissu de verre, dont la finition est assurée par de la peinture. Un tel revêtement est intéressant dans la mesure où il s'agit d'une toile résistante, qui est également susceptible de masquer certaines irrégularités du support, et qui ne laisse pas transparaître l'apparition de défauts sur le support, tels que de légères fissures.

Il existe aujourd'hui différents types de toiles à peindre. Dans une technique qui est la plus simple et la plus utilisée, la toile se présente sous une forme apprêtée, et est collée sur le support par une couche de colle. Il convient ensuite de passer au moins deux couches de peinture sur la toile pour obtenir une finition satisfaisante.

Dans un deuxième type de toile, l'envers de la toile est revêtu d'une couche d'adhésif ayant pour seule fonction d'assurer le positionnement de la toile contre le support, la fixation définitive étant réalisée par une peinture adaptée possèdant un pouvoir collant, qui traverse la toile pour assurer le collage, tout en assurant la fonction d'une sous-couche décorative. Cette technique nécessite une toile de porosité importante, pour permettre le passage de la peinture, et met en oeuvre des quantités de peinture très importantes.

Une troisième solution consiste à utiliser une peinture colle colorée de la teinte souhaitée, le mur étant encollé à l'aide de cette peinture colle, puis la toile posée contre le mur, une partie de la peinture colle traversant la toile grâce à une grande porosité de celle-ci, la toile une fois collée contre le mur ne nécessitant le passage que d'une seule couche de peinture de finition. Dans ce cas encore, la consommation de peinture est très importante.

Une autre solution consiste à utiliser une toile traitée sur les deux faces avec un apprêt blanc et opacifiant. Cette toile est collée à l'aide d'une colle spécifique, de façon traditionnelle sur le support, après quoi il n'est nécessaire de passer qu'une couche de peinture de finition.

Le but de l'invention est de fournir une toile à peindre qui puisse être posée simplement et rapidement par un opérateur, même peu compétant et avec un temps de pose et de finition, notamment en matière de peinture, qui soit aussi réduit que possible.

A cet effet, la toile à peindre qu'elle concerne comprend sur sa face endroit une enduction d'un apprêt formant sous-couche et ne nécessitant que le passage d'une couche de peinture de finition, sur sa face envers d'une part une enduction de ce même apprêt pour boucher les pores de la toile et lui conférer une bonne étanchéité, et d'autre part une couche de colle réactivable à l'eau.

Il suffit à l'opérateur de réactiver la face encollée avec une brosse à tapisser et de l'eau tiède, la quantité d'eau déposée étant de l'ordre de 120 à 150 g/m² avant de poser la toile contre son support. Les lés de toiles sont posés bord à bord et plaqués au support à l'aide d'un rouleau de mousse ou d'une brosse à tapisser. Après arasement éventuel, et séchage complet de la colle pendant un temps de l'ordre de 4 à 6 heures à 20°C, il suffit d'appliquer une seule couche de peinture de finition.

Selon une forme d'exécution, dans la mesure où la toile est un tissu de verre, celui-ci comporte en chaîne un fil texturé de l'ordre de 136 tex avec une réduction de 3 fils par cm, et en trame une mèche de l'ordre de 300 tex avec une réduction de 1,8 fil par cm, la masse surfacique de ce tissu étant de l'ordre de 115 g/m².

Selon une caractéristique de l'invention, l'apprêt se présente sous la forme d'une solution aqueuse contenant :
- un élément structurant constitué par un amidon cristallin soluble à froid,
- une charge blanche et occultante,
- un agent ignifugeant,
- une combinaison d'agents hydrofugeants,
- un liant acrylique à caractère hydrophobe.

Suivant une forme préférée de cet apprêt d'enduction :
- la charge blanche et occultante est à base d'oxyde de titane,
- l'agent ignifugeant est constitué par un oxyde d'antimoine,
- la combinaison d'agents hydrofugeants est à base de paraffine et de sels de zirconium,
- le liant acrylique possède un grade moyen avec une température de transition vitreuse comprise entre 0 et 10°C.

Avantageusement, l'apprêt possède la composition pondérale suivante :
· Eau adoucie 56 %
· Amidon soluble à froid 8 %
· Trioxyde d'antimoine 5 %
· Paraffine 1 %
· Sels de zirconium 4 %
· Liant acrylique 14 %
· Oxyde de titane 12 %

Selon une autre caractéristique de l'invention, la colle contient de l'amidon constitué par une fécule de pomme de terre prégélatinisée et un liant acrylique à caractère hydrophobe.

Le liant acrylique donne une bonne cohésion au film d'apprêt, et assure un rôle de dispersion de l'amidon sans nuire à la cohésion du film. En outre, ce liant possède l'intérêt de bénéficier d'un bon pouvoir collant.

Avantageusement, la colle réactivable a la composition pondérale suivante :
· Eau adoucie 70 %
· Amidon 25 %
· Liant acrylique 5 %

Selon une autre caractéristique de cette toile à peindre, la quantité d'enduction d'apprêt sur l'ensemble des deux faces est de l'ordre de 65 g/m², tandis que la quantité d'enduction de colle est de l'ordre de 50 g/m², ces valeurs étant exprimées en extraits secs de ces produits.

Il en résulte que la toile à peindre traitée possède une masse surfacique de l'ordre de 230 g/m² ce qui est le double de la masse surfacique du produit écru.

Comme il ressort de ce qui précède, l'invention apporte une grande amélioration à la technique existante en fournissant une toile à peindre dont la structure permet de limiter au maximum les opérations de mise en oeuvre, tout en simplifiant ces mêmes opérations, puisque ces opérations de mise en oeuvre se limitent à la réactivation de la colle à l'aide d'eau, et au passage, sur la toile collée sur son support, d'une couche de peinture de finition.

Comme il va de soi, l'invention ne se limite pas à la seule forme d'exécution de cette toile décrite ci-dessus à titre d'exemple, elle en embrasse au contraire toutes les variantes d'exécution. C'est ainsi notamment que cette toile pourrait ne pas être une toile de verre, mais réalisée à partir d'autres fibres, ou encore que la texture de la toile ou sa masse surfacique pourrait être différente, ou encore que les quantités d'apprêt et de colle pourraient être différentes sans que l'on sorte pour autant du cadre de l'invention.

## Revendications

1. Toile à peindre destinée à former un revêtement d'une surface intérieure de bâtiment, **caractérisée en ce qu'**elle comprend sur sa face endroit une enduction d'un apprêt formant sous-couche et ne nécessitant que le passage d'une couche de peinture de finition, sur sa face envers d'une part une enduction de ce même apprêt pour boucher les pores et de la toile et lui conférer une bonne étanchéité, et d'autre part une couche de colle réactivable à l'eau, *ledit apprêt se présentant sous la forme d'une solution aqueuse contenant :*
- *un élément structurant constitué par un amidon cristallin soluble à froid,*
- *une charge blanche et occultante,*
- *un agent ignifugeant,*
- *une combinaison d'agents hydrofugeants,*
*un liant acrylique à caractère hydrophobe*.

2. Toile à peindre selon la revendication 1, **caractérisée en ce que** la toile est un tissu de verre.

3. Toile à peindre selon la revendication 2, **caractérisée en ce que** le tissu comporte en chaîne un fil texturé de l'ordre de 136 tex avec une réduction de 3 fils par cm, et en trame une mèche de l'ordre de 300 tex avec une réduction de 1,8 fil par cm, la masse surfacique de ce tissu étant de l'ordre de 115 g/m².

4. Toile à peindre selon *l'une quelconque des revendications 1 à 3*, **caractérisée en ce que** :
- la charge blanche et occultante est à base d'oxyde de titane,
- l'agent ignifugeant est constitué par un oxyde d'antimoine,
- la combinaison d'agents hydrofugeants est à base de paraffine et de sels de zirconium,
- le liant acrylique possède un grade moyen avec une température de transition vitreuse comprise entre 0 et 10°C.

5. Toile à peindre selon la revendication *4*, **caractérisée en ce que** l'apprêt possède la composition pondérale suivante :
• Eau adoucie 56 %
• Amidon soluble à froid 8 %
• Trioxyde d'antimoine 5 %
• Paraffine 1 %
• Sels de zirconium 4 %
• Liant acrylique 14 %
• Oxyde de titane 12 %

6. Toile à peindre selon l'une des revendication 1 à *5*, **caractérisée en ce que** la colle réactivable contient de l'amidon constitué par une fécule de pomme de terre prégélatinisée et un liant acrylique à caractère hydrophobe.

7. Toile à peindre selon la revendication *6*, **caractérisée en ce que** la colle réactivable a la composition pondérale suivante :
• Eau adoucie 70 %
• Amidon 25 %
• Liant acrylique 5%

8. Toile à peindre selon l'une quelconque des revendications 3 à 7, **caractérisée en ce que** la quantité d'enduction d'apprêt sur l'ensemble des deux faces est de l'ordre de 65 g/m² tandis que la quantité d'enduction de colle est de l'ordre de 50 g/m² ces valeurs étant exprimées en extraits secs de ces produits.

## Claims

1. Paintable fabric intended to form a covering for an interior surface of a building, **characterized in that** it comprises on its right side face a coating of a size forming an under-coat and only requiring the application of a finishing coat of paint, on its reverse face on the one hand a coating of this same size to stop the pores of the fabric and to give the fabric good impermeability, and on the other hand a coat of glue that can be reactivated with water, the said size being in the form of an aqueous solution containing :
- a structuring element consisting of a cold-soluble crystalline starch,
- a white covering filler,
- a fireproofing agent,
- a combination of waterproofing agents,
- an acrylic binder with a hydrophobic character.

2. Paintable fabric according to claim 1, **characterized in that** the fabric is a glass cloth.

3. Paintable fabric according to claim 2, **characterized in that** the cloth comprises in the warp a textured yarn of the order of 136 tex with a reduction of 3 threads per cm, and in the weft a roving of the order of 300 tex with a reduction of 1.8 threads per cm, the surface density of this cloth being of the order of 115 g/m².

4. Paintable fabric according to any one of claims 1 to 3, **characterized in that** :
- the white covering filler is based on titanium oxide,
- the fireproofing agent consists of an antimony oxide,
- the combination of waterproofing agents is based on paraffin and zirconium salts,
- the acrylic binder possesses a medium grade with a glass transition temperature of between 0 and 10°C.

5. Paintable fabric according to claim 4, **characterized in that** the size possesses the following composition by weight:
. Softened water 56 %
. Cold-soluble starch 8 %
. Antimony trioxide 5 %
. Paraffin 1 %
. Zirconium salts 4 %
. Acrylic binder 14 %
. Titanium oxide 12 %

6. Paintable fabric according to one of claims 1 to 5, **characterized in that** the reactivatable glue contains starch consisting of a pregelatinised potato farina and an acrylic binder with a hydrophobic character.

7. Paintable fabric according to claim 6, **characterized in that** the reactivatable glue has the following composition by weight :
. Softened water 70 %
. Starch 25 %
. Acrylic binder 5 %

8. Paintable fabric according to any one of claims 3 to 7, **characterized in that** the quantity of size coated onto both faces is of the order of 65 g/m² whereas the quantity of glue coating is of the order of 50 g/m², these values being expressed as the dry solids of these products.

## Patentansprüche

1. Leinwand zur Ausbildung einer Verkleidung einer inneren Oberfläche eines Gebäudes, **dadurch gekennzeichnet, dass** sie auf ihrer Oberseite eine Beschichtung aus einer Appretur aufweist, die eine Unterschicht bildet und nur das Auftragen eines Endanstrichs erfordert, auf ihrer Unterseite einerseits eine Beschichtung derselben Appretur aufweist, um die Poren der Leinwand zu verstopfen und ihr eine gute Dichtigkeit zu verleihen, und andererseits eine mit Wasser reaktivierbare Klebeschicht aufweist, wobei die Appretur in Form einer wässrigen Lösung vorliegt, welche enthält:
- ein strukturbildendes Element, das aus einer kaltlöslichen kristallinen Stärke besteht,
- einen weißen und deckenden Füllstoff,
- ein feuerhemmendes Mittel,
- eine Kombination aus wasserabstoßenden Mitteln, und
- ein hydrophobes Acryl-Bindemittel.

2. Leinwand nach Anspruch 1, **dadurch gekennzeichnet, dass** die Leinwand ein Glasgewebe ist.

3. Leinwand nach Anspruch 2, **dadurch gekennzeichnet, dass** das Gewebe in den Kettfäden einen texturierten Faden von etwa 136 tex mit einer Reduktion von 3 Fäden pro cm aufweist und in den Schussfäden einen Docht von etwa 300 tex mit einer Reduktion von etwa 1,8 Fäden pro cm aufweist, wobei die Flächenmasse dieses Gewebes etwa 115 g/m² beträgt.

4. Leinwand nach einem der Ansprüche 1 bis 3, **dadurch gekennzeichnet, dass**:
- der weiße und deckende Füllstoff ein Füllstoff auf Titanoxid-Basis ist,
- das feuerhemmende Mittel durch ein Antimonoxid gebildet ist,
- die Kombination wasserabstoßender Mittel eine Kombination auf Paraffin- und Zirkonsalz-Basis ist, und
- das Acryl-Bindemittel einen mittleren Grad besitzt mit einer Glasübergangstemperatur zwischen 0 und 10°C.

5. Leinwand nach Anspruch 4, **dadurch gekennzeichnet, dass** die Appretur die folgende Gewichtszusammensetzung besitzt:
- weichgemachtes Wasser 56%
- kaltlösliche Stärke 8%
- Antimontrioxid 5%
- Paraffin 1%
- Zirkonsalze 4%
- Acryl-Bindemittel 14%
- Titanoxid 12%

6. Leinwand nach einem der Ansprüche 1 bis 5, **dadurch gekennzeichnet, dass** der reaktivierbare Klebstoff Stärke enthält, die durch eine pregelatinisierte Kartoffel-Wurzelstärke und ein hydrophobes Acryl-Bindemittel gebildet ist.

7. Leinwand nach Anspruch 6, **dadurch gekennzeichnet, dass** der reaktivierbare Klebstoff die folgende Gewichtszusammensetzung hat:
- weichgemachtes Wasser 70%
- Stärke 25%
- Acryl-Bindemittel 5%

8. Leinwand nach einem der Ansprüche 3 bis 7, **dadurch gekennzeichnet, dass** die Länge der Appretur-Beschichtung auf der Gesamtheit der beiden Flächen etwa 65 g/m² beträgt, während die Menge der Klebstoff-Beschichtung etwa 50 g/m² beträgt, wobei diese Werte als Trockenauszüge dieser Produkte angegeben sind.
